Europäisches Patentamt

European Patent Office

Office européen des brevets

(19)

(11) Veröffentlichungsnummer: **0 012 890**
**B1**

(12) # EUROPÄISCHE PATENTSCHRIFT

(45) Veröffentlichungstag der Patentschrift:
**19.01.83**

(21) Anmeldenummer: **79104912.5**

(22) Anmeldetag: **05.12.79**

(51) Int. Cl.³: **F 16 K 21/00, E 03 C 1/06**

(54) **Stationäres Wasserauslauf-Ventil, insbesondere für sanitäre Zwecke.**

(30) Priorität: **06.12.78 DE 2852629**

(43) Veröffentlichungstag der Anmeldung:
**09.07.80 Patentblatt 80/14**

(45) Bekanntmachung des Hinweises auf die Patenterteilung:
**19.01.83 Patentblatt 83/3**

(84) Benannte Vertragsstaaten:
**AT CH DE FR IT NL SE**

(56) Entgegenhaltungen:
**AU-B-448 806**
**DE-A-2 547 252**
**DE-B-2 108 103**
**FR-A-1 106 283**

(73) Patentinhaber: **Hans Grohe GmbH & Co KG,**
**Postfach 45, D-7622 Schiltach (DE)**

(72) Erfinder: **Grohe, Klaus, Breitwiese, D-7622 Schiltach**
**(DE)**

(74) Vertreter: **Patentanwälte Ruff und Beier,**
**Neckarstrasse 50, D-7000 Stuttgart 1 (DE)**

Stationäres Wasserauslauf-Ventil, insbesondere für sanitäre Zwecke

Die Erfindung betrifft ein stationäres Wasserauslauf-Ventil, insbesondere für sanitäre Zwecke, mit einem einzigen, mit dem Auslauf-Ende des Ventilgehäuses verbundenen Auslauf in Form eines an das Auslauf-Ende des Ventilgehäuses angeschlossenen flexiblen Schlauches und mit einem mit dem freien Schlauchende verbundenen Auslauf-Endstück, für das am Ventilgehäuse eine Halterung vorgesehen ist, wobei die für das Auslauf-Endstück vorgesehene Halterung mit dem Ventilgehäuse um eine vertikale Achse schwenkbar verbunden ist.

Derartige Ventile sind schon seit einiger Zeit bekannt, weisen jedoch verschiedene, jeweils aufbaubedingte Nachteile auf, die zur Folge hatten, daß derartige Ventile bisher nur wenig Anklang beim Benutzer fanden. Bei den bisher bekannten derartigen Ventilen ist nämlich das Auslauf-Endstück nach Art einer Handbrause ausgebildet, d. h. es weist einen hohlen, der Wasserzufuhr zum Auslauf-Endstück dienenden Handgriff auf, dessen vom Auslauf-Endstück abgewandtes Ende in eine rohrförmige Halterung zu schieben ist. Dies bedingt zum einen relativ hohe Herstellungskosten und zum anderen eine relativ umständliche Handhabung des Auslauf-Endstückes, da dessen Handgriff vom Benutzer nur seitlich erfaßt werden kann und freie Schlauchbewegungen verhindert.

Aus der DE-A-2 547 252 ist eine Mischbatterie bekannt, die neben den vorerwähnten Nachteilen noch weitere Nachteile aufweist. Zu diesen zusätzlichen Nachteilen zählt insbesondere der Umstand, daß der Auslauf dieser Batterie nicht verschwenkt werden kann. Hinzukommt, daß die aus der DE-A-2 547 252 bekannte Mischbatterie wegen der rechtwinklig verlaufenden Wasserzufuhr zum Auslauf-Endstück geräuschvoll arbeitet und daß das als Handbrause ausgebildete Auslauf-Endstück genau ausgerichtet werden muß, um in die im Batteriegehäuse zugeordnete Aufnahme eingeführt werden zu können.

Der Erfindung liegt die Aufgabe zugrunde, hier Abhilfe zu schaffen, d. h. die Handhabung eines Ventils der eingangs beschriebenen Art zu verbessern und dessen Anwendungsmöglichkeiten zu erweitern.

Diese Aufgabe wird erfindungsgemäß durch ein Ventil der eingangs beschriebenen Art gelöst, bei der das Auslauf-Endstück als griffartiges kompaktes Kopfstück ausgebildet ist und einen Anschluß-Stutzen für den Schlauch aufweist, der im wesentlichen über seine gesamte Länge in die Halterung einführbar ist.

Das als Griff ausgebildete Kopfstück kann bei eingeschobenem Anschluß-Stutzen unmittelbar an der Halterung anliegen.

Bei einer bevorzugten Ausführungsform ist vorgenanntes Kopfstück mit dem Schlauch über einen Anschluß-Stutzen verbunden, dessen Länge kürzer als 8 cm, vorzugsweise kürzer als 6 cm ist und der stufenförmig ausgebildet sein kann. Dieser Anschluß-Stutzen ist vorzugsweise mindestens teilweise konisch ausgebildet.

Das griffartige Kopfstück ist vorzugsweise im wesentlichen kugelförmig ausgebildet. Im Kopfstück schließt die Wassereintrittsrichtung mit der Wasseraustrittsrichtung vorzugsweise einen Winkel von 90° ein.

Das Kopfstück ist vorzugsweise als Brausekopf ausgebildet, dessen Strahl insbesondere auf Voll- oder Mouseur-Strahl umschaltbar ist. Dem Anschluß-Stutzen des Kopfstückes ist in der Halterung vorzugsweise eine seinen Abmessungen entsprechende Ausnehmung zugeordnet, wobei der Anschluß-Stutzen und die ihm in der Halterung zugeordnete Ausnehmung jeweils in ihrer Konizität entsprechende konische Paßflächen aufweisen können. Der Anschluß-Stutzen und die ihm in der Halterung zugeordnete Ausnehmung können jeweils mit eine gegenseitige Verdrehung verhindernden, axial verlaufenden zusammenwirkenden Profilierung versehen sein.

Der Anschluß-Stutzen des erfindungsgemäßen Ventils kann zur bequemeren Handhabung des Kopfstückes ein Kugelgelenk aufweisen.

Bei einer bevorzugten Ausführungsform des erfindungsgemäßen Ventils weist die Halterung ein der Führung des Schlauches und des Anschluß-Stutzens dienendes Rohrstück auf, das eine untere axial bis zum freien Rohrstück-Ende durchgehende schlitzartige Durchbrechung besitzt, deren lichte Weise größer als der Außendurchmesser des Schlauches und kleiner als der maximale Außendurchmesser des Anschluß-Stutzens ist und durch die der Schlauch von außen in die Halterung einführbar ist. Vorgenanntes Rohrstück kann im wesentlichen horizontal verlaufen. Bei einer anderen bevorzugten Ausführungsform ist die Halterung rohrförmig ausgebildet. Dieses Rohrstück verläuft schräg nach oben und ist am freien Ende im wesentlichen vertikal abgeschrägt.

Das erfindungsgemäße Ventil kann als Wasserhahn, vorzugsweise als einhändig bedienbares Einhebel-Mischventil ausgebildet sein.

Bei vevorzugten Ausführungsformen des erfindungsgemäßen Ventils ist dessen Anschluß-Stutzen jeweils eine zweite, vom Ventil entfernt angeordnete Halterung zugeordnet, mit der er ebenfalls lösbar, d. h. abnehmbar verbindbar ist und die eine der der ersten Halterung entsprechenden, der Aufnahme des Anschluß-Stutzens dienende Ausnehmung aufweist.

Weitere Einzelheiten, Vorteile und Merkmale der Erfindung ergeben sich aus den Ansprüchen und der nachfolgenden Beschreibung zweier bevorzugter Ausführungsformen des erfindungsgemäßen Ventils im Zusammenhang mit der Zeichnung. In der Zeichnung zeigen jeweils schematisch:

Fig. 1 eine teilweise geschnittene Seitenansicht eines als Mischbatterie mit vertikaler Wasserzuführung ausgebildeten Ventils,

Fig. 2 eine teilweise geschnittene Seitenansicht eines als Mischbatterie mit horizontaler Wasserzuführung ausgebildeten Ventils und

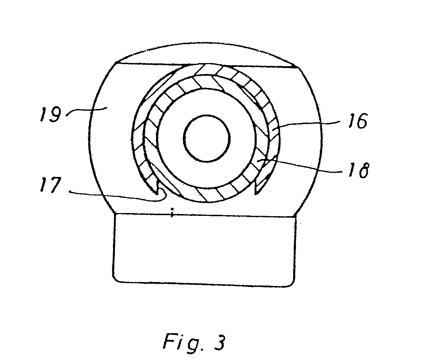

Fig. 3 einen Schnitt entlang der Linie III-III in Fig. 2.

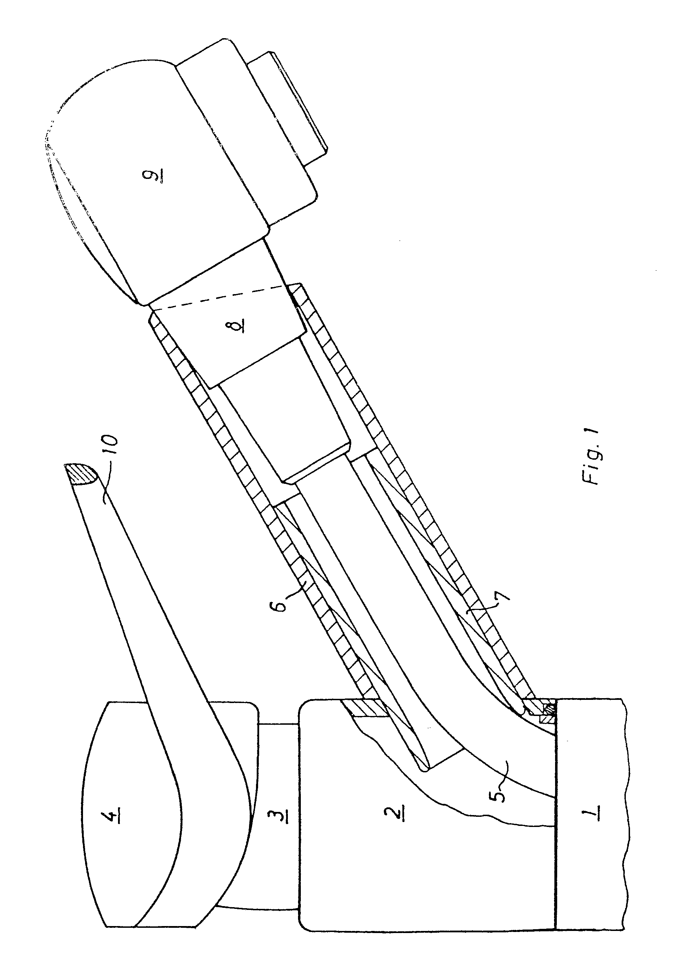

Die in Fig. 1 dargestellte Mischbatterie besteht im wesentlichen aus vier Teilen — einem auf einer horizontalen Fläche z. B. dem wandseitigen Rand eines Waschbeckens montierten Basisteil 1, einem mit dem Basisteil 1 schwenkbar verbundenen Auslaufteil 2, einem mit dem Basisteil 1 fest verbundenen Ventilgehäuse 3 und einem Oberteil 4.

Das Basisteil 1 ist ein im wesentliches zylindrisch ausgebildeter Hohlkörper, in dessen Innerem vier, jeweils im wesentlichen vertikal verlaufende Leitungen geführt sind — eine Rohrleitung für Kaltwasser, eine Rohrleitung für Warmwasser, eine Rohrleitung für Mischwasser und ein flexibler Schlauch 5. Mit dem Basisteil 1 ist das Auslaufteil 2 um die den beiden Teilen gemeinsame Längsachse schwenkbar verbunden. Das Auslaufteil 2 ist ein im wesentlichen zylindrisch ausgebildeter Hohlkörper, der eine seitliche Durchbrechung aufweist, an die sich ein mit dem zylindrischen Hohlkörper fest verbundenes, von der horizontalen schräg nach oben gerichtetes Rohrstück 6 anschließt. Das Rohrstück 6 weist einen der Führung des Schlauches 5 dienenden, rohrförmig ausgebildeten Einsatz 7 auf, dessen unteres, in der Zeichnung links dargestelltes Ende bis in das Auslaufteil-Innere ragt. An seinem freien, in der Zeichung rechts dargestellten Ende ist das Rohrstück 6 zur Vertikalen hin abgeschrägt. In diesem Bereich weist das Rohrstück 6 innen eine konische Paßfläche für einen außen entsprechend konisch ausgebildeten kurzen Anschluß-Stutzen 8 eines Auslauf-Endstückes auf, das bei der dargestellten Ausführungsform ein griffartig und im wesentlichen kugelförmig ausgebildeter Brausekopf 9 ist. An den Anschluß-Stutzen 8 des Brausekopfes 9 ist das freie Ende des vorerwähnten flexiblen Schlauches 5 angeschlossen. Dieser Schlauch ragt durch das Rohrstück 6, den unteren Bereich des Auslaufteiles 2, das Basisteil 1 und den in der Zeichnung nicht dargestellten Waschbeckenrand, unterhalb dessen er eine durchhängende Schlaufe bildet und an die vorerwähnte Mischwasserleitung angeschlossen ist.

Das freie, mit dem Brausekopf 9 verbundene Schlauchende bildet zusammen mit dem seiner Halterung dienenden Rohrstück 6, das zusammen mit dem Auslaufteil 2 um dessen Vertikale Längsachse verschwenkbar ist, den schwenkbaren Auslauf des erfindungsgemäßen Ventils, so daß der Brausekopf 9 um die vertikale Längsachse des Auslaufteiles geschwenkt werden kann. Der Brausekopf 9 ist mit dem seiner Halterung dienenden Rohrstück 6 abnehmbar verbunden, so daß er zusammen mit dem freien Schlauchende abgezogen werden kann, wenn mit ihm vom Auslaufteil 2 weiter entfernte Bereiche erreicht werden sollen. Er kann auch im Rohrstück 6 um dessen Längsachse gedreht werden.

Im oberen Bereich des Auslaufteiles 2 ist das eigentliche Ventilgehäuse 3 der Mischbatterie angeordnet. Mit dem feststehenden Ventilgehäuse 3 und dem Basisteil 1 ist das Auslaufteil 2 um die gemeinsame, vertikal verlaufende Längsachse drehbar verbunden. Dem im Inneren des Ventilgehäuses 3 angeordneten, nicht dargestellten Ventilkörper ist eine mit seinem Gehäuse kugelgelenkartig verbundene Betätigungseinrichtung zugeordnet, die vom Oberteil 4 gebildet wird, das einen bügelförmigen Griff 10 aufweist, der wegen der kugelgelenkartigen Verbindung zwischen dem Oberteil 4 und dem Ventilgehäuse 3 gehoben, gesenkt und/oder um eine im wesentlichen vertikale Achse verschwenkt werden kann, wobei sich durch Heben bzw. Senken dieses Griffes 10 die Menge des ausströmenden Wassers und durch Verschwenken dieses Griffes 10 die Temperatur des ausströmenden Wassers, d. h. das Kalt-/Warmwasser-Verhältnis, regeln läßt.

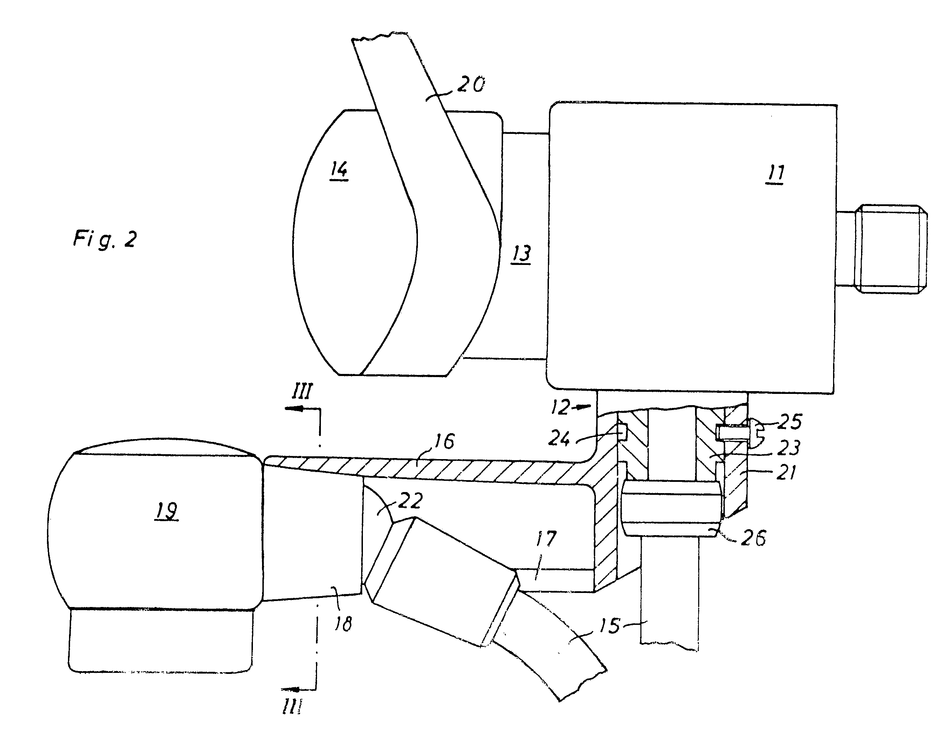

Die in Fig. 2 dargestellte Mischbatterie besteht ebenfalls im wesentlichen aus vier Teilen — einem an einer vertikalen Fläche, z. B. einer einem Badewannen-Rand benachbarten Wand montierbaren Basisteil 11, einem mit diesem schwenkbar verbundenen Auslaufteil 12, einem mit dem Basisteil 11 fest verbundenen Ventilgehäuses 13 und dem Oberteil 14.

Das Basisteil 11 ist ein im wesentlichen zylindrisch ausgebildeter Hohlkörper, in dessen Innerem drei Leitungen geführt sind — eine Rohrleitung für Kaltwasser, eine Rohrleitung für Warmwasser und eine Rohrleitung für Mischwasser. An dem Auslaufende der Mischwasser-Leitung ist das eine Ende eines flexiblen Schlauches 15 angeschlossen. In der zylindrischen, horizontal verlaufenden Wandung des Basisteiles 11 ist eine nach unten weisende, kreisförmige Durchbrechung vorgesehen, die einem im wesentlichen rohrförmig ausgebildeten Teil 21 des Auslaufteiles 12 als Führung dient. Dieser im wesentlichen rohrförmige Teil 21 des Auslaufteiles 12 weist ein im wesentlichen rechtwinklig von ihm abragendes, mit ihm fest verbundenes Rohrstück 16 auf. Dieses Rohrstück 16 ist an seinem freien, in der Zeichnung links dargestellten Ende innen mit einer konischen Paßfläche für einen außen entsprechend konisch ausgebildeten Anschluß-Stutzen 18 eines Auslauf-Endstückes versehen, das, wie bei der zuvor beschriebenen Ausführungsform auch, von einem griffartig und kugelförmig ausgebildeten Brausekopf 19 gebildet wird. Das Rohrstück 16 weist eine axial von der Basis bis zum freien Rohrstückende verlaufende, durchgehende schlitzartige Durchbrechung 17 auf, so daß der Anschluß-Stutzen 18 des Brausekopfes 19 in das freie Ende des Rohrstückes 16 — in der Zeichnung von links nach rechts — geschoben werden kann, ohne hierbei durch das an ihm über ein Kugelgelenk 22 angeschlossene Schlauchende behindert zu werden, da die Breite der schlitzartigen Rohrstück-Durchbrechung 17 bei der dargestellten Ausführungsform im wesentlichen dem maximalen Durchmesser des Kugelgelenkes 22 entspricht. Falls ein solches Kugelgelenk 22 nicht vorgesehen sein sollte, genügt es, wenn die Breite der vorgenannten Durchbrechung im wesentlichen dem Außendurchmesser des Schlauches 15 entspricht. Das Kugelgelenk 22 erlaubt ein Verdrehen des Brausekopfes im Rohrstück 16, wenn der Schlauch 15 schräg nach unten durch den unteren Schlitz 17 hindurchragt.

Bei der Ausführungsform nach Fig. 2 ragt der Schlauch 15 durch das im wesentlichen rohrförmige Teil 21 des Auslaufteiles 12, bildet eine durchhängende Schlaufe und mündet mit seinem anderen Ende im Brausekopf 19 bzw. dem seinem Anschluß-Stutzen 18 zugeordneten Kugelgelenk 22.

Das freie, mit dem Brausekopf 19 verbundene Schlauchende bildet zusammen mit dem seiner Halterung dienenden Rohrstück 16, das zusammen mit dem Auslaufteil 12 um die vertikal verlaufende Längsachse des rohrförmigen Teiles 21 des Auslaufstückes 12 verschwenkbar ist, den schwenkbaren Auslauf des erfindungsgemäßen Ventils, so daß der Brausekopf 19 um die vorerwähnte, vertikal verlaufende Achse verschwenkt werden kann. Der Brausekopf 19 ist, wie bei der zuvor beschriebenen Ausführungsform auch, mit dem seiner Halterung dienenden Rohrstück 16 abnehmbar verbunden, so daß auch er zusammen mit dem freien Schlauchende abgezogen werden kann, wenn mit ihm vom Basisteil 11 weiterentfernte Bereiche erreicht werden sollen.

An seinem, von der nicht dargestellten Wand abgewandten, in der Zeichnung links dargestellten Ende, ist das Basisteil 11 mit dem eigentlichen Ventilgehäuse 13 der Mischbatterie verbunden.

Dem im Inneren des Ventilgehäuses 13 angeordneten, nicht dargestellten Ventilkörper ist auch bei dieser Ausführungsform eine mit seinem Gehäuse kugelgelenkartig verbundene Betätigungseinrichtung zugeordnet, die vom Oberteil 14 gebildet wird, das einen bügelförmigen Griff 20 aufweist. Der Griff 20 kann wegen der kugelgelenkartigen Verbindung zwischen dem Oberteil 14 und dem Ventilgehäuse 13 gehoben, gesenkt und/oder um eine im wesentlichen horizontal verlaufende Achse verschwenkt werden, wobei sich durch Heben bzw. Senken dieses Griffes 20 die Menge des ausströmenden Wassers und durch Verschwenken dieses Griffes 20 die Temperatur des ausströmenden Wassers, d. h. das Kalt-/Warmwasser-Verhältnis regeln läßt.

Das vom Brausekopf 19 abgewandte Ende des Schlauches 15 kann mittels einer Schlauchschelle direkt am freien Ende des Mischwasserrohres angeschlossen werden oder aber unter Zwischenschaltung eines Kupplungsstückes 23, das der Halterung des Auslaufteiles 12 dient und hierzu eine umlaufende Ringnut 24 für eine im Auslaufteil 12 vorgesehene Stellschraube 25 aufweist. Der Befestigung zwischen Schlauchende und Kupplungsstück kann wiederum eine herkömmliche Schlauchschelle dienen. Vorzugsweise ist hierzu jedoch eine mit dem Kupplungsstutzen 23 verschraubbare, das Schlauchende gegen das Kupplungsstück drückende Überwurfmutter 26 vorgesehen.

Bei der in Fig. 1 dargestellten Ausführungsform kann der unter dem Waschbeckenrand befindlichen Schlauchschlaufe ein Gewicht zugeordnet sein, das den Schlauch nach unten und damit den Anschluß-Stutzen 8 des Brausekopfes 9 in die ihm zugeordnete Halterungs-Ausnehmung, d. h. das offene Ende des Rohrstückes 16 zieht.

Bei den dargestellten Ausführungsformen weisen die Anschluß-Stutzen 8, 18 und die ihnen in der Halterung, d. h. in den Rohrstücken 6, 16 zugeordneten Ausnehmungen jeweils in ihrer Konizität entsprechende konische Paßflächen auf. Um ggf. ungewollte Verdrehungen zu erschweren bzw. unmöglich zu machen, können die Anschluß-Stutzen 8, 18 und die ihnen zugeordneten Ausnehmungen jedoch auch jeweils axial verlaufende, zusammenwirkende Profilierungen aufweisen.

Dem Brausekopf kann neben dem seiner Halterung am Auslaufteil 2, 12 dienenden Halterung eine zweite, vom Ventil entfernt angeordnete Halterung zugeordnet sein, mit der der Brausekopf ebenfalls lösbar verbindbar ist und die eine der ersten Halterung entsprechende, der Aufnahme des Brausekopf-Anschluß-Stutzens 8, 18 dienende Ausnehmung aufweist, so daß es möglich ist, den Brausekopf auch als Wand- oder Deckenbrause zu benutzen.

Der Brausestrahl des Brausekopfes 9, 19 ist vorzugsweise in an sich bekannter Weise auf Voll- bzw. Mouseurstrahl umschaltbar, so daß er für alle sanitären Reinigungszwecke einsetzbar ist.

**Patentansprüche**

1. Stationäres Wasserauslauf-Ventil, insbesondere für sanitäre Zwecke, mit einem einzigen, mit dem Auslauf-Ende des Ventilgehäuses (3, 13) verbundenen Auslauf in Form eines an das Auslauf-Ende des Ventilgehäuses (3, 13) angeschlossenen flexiblen Schlauches (5, 15) und mit einem mit dem freien Schlauchende verbundenen Auslauf-Endstück (8, 9; 18, 19), für das am Ventilgehäuse (3, 13) eine Halterung (6, 16) vorgesehen ist, die mit dem Ventilgehäuse (3, 13) um eine vertikale Achse schwenkbar verbunden ist, dadurch gekennzeichnet, daß das Auslauf-Endstück (8, 9; 18, 19) als griffartiges kompaktes Kopfstück ausgebildet ist und einen Anschluß-Stutzen (8, 18) für den Schlauch (5, 15) aufweist, der im wesentlichen über seine gesamte Länge in die Halterung (6, 16) einführbar ist.

2. Ventil nach Anspruch 1, dadurch gekennzeichnet, daß der Anschluß-Stutzen (8, 18) kürzer als 8 cm, vorzugsweise kürzer als 6 cm ist.

3. Ventil nach Anspruch 2, dadurch gekennzeichnet, daß der Anschluß-Stutzen (8) stufenförmig ausgebildet ist.

4. Ventil nach einem der Ansprüche 2 oder 3, dadurch gekennzeichnet, daß der Anschluß-Stutzen (8, 18) mindestens teilweise konisch ausgebildet ist.

5. Ventil nach einem der vorhergehenden Ansprüche, dadurch gekennzeichnet, daß das Kopfstück (9, 19) im wesentlichen kugelförmig ausgebildet ist und die Wassereintrittsrichtung mit der Wasseraustrittsrichtung vorzugsweise einen Winkel von etwa 90° einschließt.

6. Ventil nach einem der Ansprüche 2 bis 4, dadurch gekennzeichnet, daß der Anschluß-Stutzen (8, 18) und eine ihm in der Halterung (6, 16) zugeordnete Ausnehmung in ihrer Konizität entsprechende konische Paßflächen und vorzugsweise axial verlaufende Profilierungen aufweisen, die eine gegenseitige Verdrehung verhindern.

7. Ventil nach einem der Ansprüche 2 bis 6, dadurch gekennzeichnet, daß der Anschluß-Stutzen (18) ein Kugelgelenk (22) aufweist.

8. Ventil nach einem der vorhergehenden Ansprüche, dadurch gekennzeichnet, daß die Halterung ein der Führung des Schlauches (15) und des Anschluß-Stutzens (18) dienendes Rohrstück (16) aufweist, das eine untere axial bis zum freien Rohrstückende durchgehende, schlitzartige Durchbrechung (17) besitzt, deren lichte Weite größer als der Außendurchmesser des Schlauches (15) und kleiner als der maximale Außendurchmesser des Anschluß-Stutzens (18) ist und durch die der Schlauch von außen in die Halterung einführbar ist.

9. Ventil nach Anspruch 8, dadurch gekennzeichnet, daß das Rohrstück (16) im wesentlichen horizontal verläuft.

10. Ventil nach einem der Ansprüche 1 bis 7, dadurch gekennzeichnet, daß die Halterung (6) rohrförmig ausgebildet ist und schräg nach oben verläuft und ihr freies Ende im wesentlichen vertikal abgeschrägt ist.

11. Ventil nach einem der vorhergehenden Ansprüche, dadurch gekennzeichnet, daß es als ein einhändig bedienbares Ventil, vorzugsweise als ein Einhebel-Mischventil, ausgebildet ist.

12. Ventil nach einem der Ansprüche 2 bis 11, dadurch gekennzeichnet, daß dem Anschluß-Stutzen (8, 18) eine zweite, vom Ventil entfernt angeordnete Halterung zugeordnet ist, mit der der Auslauf-Stutzen (8, 18) lösbar verbindbar ist und die eine der der ersten Halterung (6, 16) entsprechende, der Aufnahme des Anschluß-Stutzens (8, 18) dienende Ausnehmung aufweist.

13. Ventil nach einem der vorhergehenden Ansprüche, dadurch gekennzeichnet, daß der Schlauch (5, 15) lediglich am Auslaufende des Ventilgehäuses (3, 13) gehalten, im übrigen über seine gesamte Länge frei bewegbar ist.

14. Ventil nach einem der vorhergehenden Ansprüche, dadurch gekennzeichnet, daß das Auslaufendstück als Brausekopf (9, 19) ausgebildet ist, dessen Strahl insbesondere auf Voll- und/oder Mousseur-Strahl umschaltbar ist.

15. Ventil nach einem der vorhergehenden Ansprüche, dadurch gekennzeichnet, daß der Anschluß-Stutzen (8, 18) und die ihm in der Halterung (6, 16) zugeordnete Ausnehmung axial verlaufende, zusammenwirkende Profilierungen aufweisen.

## Claims

1. Stationary water discharge valve, particularly for sanitary purposes, with a single outlet in the form of a flexible hose (5, 15) connected to the discharge end of the valve casing (3, 13) and with a discharge end piece (8, 9, 18, 19) connected to the free hose end, for which a mounting support (6, 16) is provided on valve casing (3, 13) and is connected to the latter so as to be pivotable about a vertical axis, characterized in that the discharge end piece (8, 9, 18, 19) is constructed as a handle-like compact head and has a connection piece (8, 18) for hose (5, 15), which is insertable into the mounting support (6, 16) over essentially its entire length.

2. Valve according to claim 1, characterized in that the connection piece (8, 18) is shorter than 8 cm, preferably shorter than 6 cm.

3. Valve according to claim 2, characterized in that the connection piece (8) is constructed in stepped manner.

4. Valve according to one of the claims 2 or 3, characterized in that the connection piece (8, 18) is at least partly conically constructed.

5. Valve according to one of the preceding claims, characterized in that the head (9, 19) is substantially spherical and the water inlet direction preferably forms an angle of approximately 90° with the water outlet direction.

6. Valve according to one of the claims 2 to 4, characterized in that the connection piece (8, 18) and a recess associated therewith in mounting support (6, 16) have conical mating surfaces whose conicity corresponds and preferably axially directed profilings, which prevent reciprocal twisting.

7. Valve according to one of the claims 2 to 6, characterized in that the connection piece (18) has a ball and socket joint (22).

8. Valve according to one of the preceding claims, characterized in that the mounting support has a pipe section (16) serving to guide hose (15) and connection piece (18), having a lower slot-like opening (17) passing axially through to the free pipe section end and whose inside diameter is larger than the outside diameter of hose (15) and smaller than the maximum outside diameter of connection piece (18) and through which the hose can be inserted from the outside into the mounting support.

9. Valve according to claim 8, characterized in that the pipe section (16) is substantially horizontal.

10. Valve according to one of the claims 1 to 7, characterized in that the mounting support (6) is tubular and slopes upwards and its free end is chamfered in a substantially vertical manner.

11. Valve according to one of the preceding claims, characterized in that it is constructed as a valve which can be operated by one hand, preferably as a single-lever mixer valve.

12. Valve according to one of the claims 2 to 11, characterized in that a second mounting support, remote from the valve, is associated with the connection piece (8, 18) and is detachably connected to the latter, said second mounting support having a recess corresponding to that of the first mounting support (6, 16) for receiving the connection piece (8, 18).

13. Valve according to one of the preceding claims, characterized in that hose (5, 15) is held solely at the discharge end of valve casing (3, 13) and is otherwise freely movable over its entire length.

14. Valve according to one of the preceding claims, characterized in that the discharge end piece is constructed as a shower head (9, 19), whose jet can in particular be changed to a full and/or froth jet.

15. Valve according to one of the preceding claims, characterized in that the connection piece (8, 18) and the recess associated therewith in mounting support (6, 16) has axially directed, cooperating profilings.

**Revendications**

1. Robinet d'eau à poste fixe, en particulier pour usages sanitaires, comprenant une unique sortie reliée à l'extrémité de sortie de la cage ou enveloppe (3, 13) du robinet, se présentant sous la forme d'un tuyau flexible (5, 15) raccordé à l'extrémité de sortie de la cage (3, 13) du robinet et comprenant une pièce terminale de sortie (8, 9; 18, 19) reliée à l'extrémité libre du tuyau, pour laquelle est prévue une monture (6, 16) sur la cage (3, 13) du robinet, qui est montée de façon pivotante autour d'un axe vertical avec la cage (3, 13) du robinet, caractérisé en ce que la pièce terminale de sortie (8, 9; 18, 19) est constituée sous forme d'une pièce de tête compacte en forme de poignée et comprend une tubulure de raccordement (8, 18) pour le tuyau (5, 15) que l'on peut introduire dans la monture (6, 16) sensiblement sur la totalité de sa longueur.

2. Robinet selon la revendication 1, caractérisé en ce que la tubulure de raccordement (8, 18) a une longueur inférieure à 8 cm, et de préférence inférieure à 6 cm.

3. Robinet selon la revendication 2, caractérisé en ce que la tubulure de raccordement (8) est constituée en gradin.

4. Robinet selon l'une des revendications 2 ou 3, caractérisé en ce que la tubulure de raccordement (8, 18) est constituée au moins partiellement sous forme conique.

5. Robinet selon l'une des revendications précédentes, caractérisé en ce que la pièce de tête (9, 19) est constituée essentiellement sous forme sphérique et en ce que la direction d'entrée de l'eau forme acec la direction de sortie de l'eau un angle qui est de préférence d'environ 90°.

6. Robinet selon l'une des revendications 2 à 4, caractérisé en ce que la tubulure de raccordement (8, 18) et un évidement qui lui est associé sur la monture (6, 16) présentent des surfaces coopérantes coniques de conicités correspondantes et de préférence des profilages orientés axialement, qui empêchent une rotation mutuelle.

7. Robinet selon l'une des revendications 2 à 6, caractérisé en ce que la tubulure de raccordement (18) comprend une articulation sphérique (22).

8. Robinet selon l'une des revendications précédentes, caractérisé en ce que la monture comprend une section de tube (16) servant au guidage du tuyau (15) et de la tubulure de raccordement (18), la section de tube présentant un évidement inférieur axial en forme de fente (17) allant jusqu'à l'extrémité libre de la section de tube, dont le diamètre interne est plus important que le diamètre externe du tuyau (15) et plus faible que le diamètre externe maximal de la tubulure de raccordement (18), et par lequel le tuyau peut être introduit de l'extérieur dans la monture.

9. Robinet selon la revendication 8, caractérisé en ce que la section de tube (16) est orientée sensiblement horizontalement.

10. Robinet selon l'une des revendications 1 à 7, caractérisé en ce que la monture (6) est constituée sous forme tubulaire et est orientée en oblique vers le haut, et est biseautée sensiblement verticalement à son extrémité libre.

11. Robinet selon l'une des revendications précédentes, caractérisé en ce qu'il est constitué sous forme d'un robinet pouvant être manié d'une seule main, et de préférence sous forme d'une robinetterie mélangeuse à levier unique.

12. Robinet selon l'une des revendications 2 à 11, caractérisé en ce qu'une seconde monture disposée à une certaine distance du robinet est associée à la tubulure de raccordement (8, 18), à laquelle la tubulure de raccordement (8, 18) peut être reliée de façon amovible, et qui comprend un évidement servant à la réception de la tubulure de raccordement (8, 18) et correspondant à celui de la première monture (6, 16).

13. Robinet selon l'une des revendications précédentes, caractérisé en ce que le tuyau (5, 15) est maintenu seulement à son extrémité de sortie de la cage (3, 13) du robinet, et est par ailleurs librement mobile sur la totalité de sa longueur.

14. Robinet selon l'une des revendications précédentes, caractérisé en ce que la pièce terminale de sortie est constituée sous la forme d'une tête de douche (9, 19), dont le jet peut être commuté en particulier entre un jet à fort débit et un jet finement pulvérisé.

15. Robinet selon l'une des revendications précédentes, caractérisé en ce que la tubulure de raccordement (8, 18) et l'évidement qui lui est associé dans la monture (6, 16) présentent des profilages associés orientés axialement.

4  10  3  9  8  6  2  5  7  1

*Fig. 1*

Fig. 2

0 012 890

Fig. 3